# EUROPEAN PATENT SPECIFICATION

(11) **EP 1 508 710 B1**
(45) Date of publication and mention of the grant of the patent: **21.03.2007**
(21) Application number: 03077758.5
(22) Date of filing: 22.08.2003
(51) Int. Cl.: F16D 1/09

(54) **A coupling device and a vehicle including such a device**
Kupplungsvorrichtung und Fahrzeug mit einer solchen Vorrichtung
Dispositif d'accouplement et un véhicule avec un tel dispositif

(43) Date of publication of application: 23.02.2005
(73) Proprietor: Ford Global Technologies, LLC, Dearborn, MI 48126 (US)
(72) Inventor: Brokholc, Michal, 43645 Askim (SE)
(74) Representative: Mossmark, Anders Lennart

(56) References cited:
- DE-B- 1 269 839
- GB-A- 618 928
- US-A- 4 178 777
- US-A- 4 668 116

## Description

### TECHNICAL FIELD

The invention relates to a coupling device provided with a tensioning device for locking and maintaining two splined sections in engagement without play in the direction of rotation.

### BACKGROUND ART

For a driving connection, such as a spline joint, between a driving axle and a wheel hub in a vehicle, it is desirable to achieve a play free connection in order to eliminate noise. For instance, when the direction of the driving torque changes as the engine switches from a driving to a braking torque, there will be a noise from a spline joint that has a play between the inner and outer splines.

There are a number of ways of overcoming this problem. One solution is to use glue, which makes assembly and servicing of the joint difficult. A further solution is to provide the joint with a tensioning device.

One example of such a tensioning device is known from DE-C-1 808 076. In this case the tensioning member forms a comparatively wide cylindrical ring made of resilient plastic which is to be fitted onto the shaft section to be inserted in the hublike shaft section, and which adjoins the end face of the hublike shaft section. The tensioning element is constructed as a cylindrical collet, which is screwable by a female screwthread threaded onto an end male screwthread of the hublike shaft section. This collet, which is drawn radially inwards at its collet end remote from the hublike shaft section in order to brace a bracing ring which it receives, houses the resilient ring. When the collet is screwed onto the hublike shaft section, the ring becomes tensioned under compression between the bracing ring and the end face of the hublike shaft section. This has the result that the plastic of the ring is pressed into the splined shaft profile of the shaft section that houses the ring, both against the end face of the hublike shaft section and against the inside face of the collet.

The purpose of this invention is to maintain the splined shaft profiles virtually without play while maintaining an axial mobility. However, the solution is not suitable for connecting a wheel hub to a driving shaft, which connection must be axially fixed. Also the resilient ring engages the outer splines of an axle, where it must be deformed radially into the space between the splines in order to act as a seal. It is not possible to ascertain if this deformation has occurred after assembly.

US 4 886 481 discloses an arrangement wherein a hublike shaft section is provided with slitted tongs at its free end region, where a tensioning member with at least one slightly tapered annular spring is arranged on the slitted end region of the hublike shaft section. The tensioning element is a stop against which the annular spring is pressable by its outer edge part in the course of bringing the two shaft sections into mutual engagement in order to generate a radial tensioning force. The annular spring and the hublike shaft section which houses it must then be mutually co-ordinated in diameter so that, at least when the radial stretched position of the annular spring is reached, or when the annular spring is pressed flat, the desired playfree engagement of the splined shaft profiles is obtained with simultaneously a slight axial sliding mobility. The invention is primarily intended for use in connection with the shaft ends of a final drive shaft and of a final gear drive shaft of a motor vehicle transmission line. The solution is not suitable for connecting a wheel hub to a driving shaft, which connection must be axially fixed. Also, there is no means for sealing such a connection against ingress of water or particles.

US-A-4,668,116 discloses a coupling for a flywheel and crankshaft whereby a deformable spline member is compressed by the action of opposed tapered surfaces.

The invention aims to solve the above problems by providing a spline joint that is both fixed and play free, as well as being sealed against ingress of contamination such as water or particles. The spline joint should also be easy to assemble and to dismantle for service.

### DISCLOSURE OF INVENTION

The above problems are solved by a coupling device and a vehicle provided with such a coupling device, according to claims 1 and 11, and their respective dependent claims.

According to a preferred embodiment, the invention relates to a coupling device arranged to maintain two torque transmitting sections in driving engagement and rotatable around a common axis, which device comprises a first splined part arranged to co-operate with a second splined part and a fastening element for connecting the first splined part and the second splined part. At least one of the splined parts has a free end section provided with at least one portion that is resiliently deformable in a radial direction, that the fastening element and said portion are each provided with co-operating contact surfaces at an angle to the axis of rotation, and that the fastening is arranged to force said at least one portion of one splined part into contact with a corresponding section of the other splined part.

According to a further embodiment the first splined part is provided with a resiliently deformable portion in the form of a slotted section having at least two radial slots at its free end. The number of slots, their width relative to the diameter of the first section and the wall thickness of the first splined section determines the stiffness of the tongues created by said slots.

According to a further embodiment the fastening element is arranged to expand the tongues making up the slotted section of the first splined part into contact with the second splined part. Hence, if the first splined part is made as a hollow cylinder with external splines, then the second splined part will comprise a hollow section with internal splines, and *vice versa.* The tolerance between the two mating parts may be selected between a loose fit and a close running fit.

According to a further embodiment the first splined part is provided with a central threaded bore arranged to co-operate with a threaded section of the fastening element. This threaded section may be an integral part of the fastening element, or be a separate threaded element, such as a screw, inserted through a central bore in the fastening element or attached to the fastening element in some way.

According to a further preferred embodiment the co-operating contact surfaces are conical. It is however possible to use one or more substantially flat contact surfaces on the first and second splined parts respectively.

According to a further embodiment, the fastening element has a radial flange arranged to co-operate with the second splined part. The radial flange may be placed in direct contact with the second splined part. However, according to a preferred embodiment, an annular elastic member is placed between the radial flange of the fastening element and the second splined part, allowing the fastening element to be centred relative to the second splined part. The elastic member may also be arranged as a seal between the fastening element and the second splined part.

According to a further preferred embodiment the first splined part is an axle in the form of a driving shaft provided with outer splines. Also, the second splined part is preferably a wheel hub provided with internal splines.

The invention further relates to a vehicle provided with a coupling device according to claim 1.

As stated above, the first splined part is preferably an axle in the form of a driving shaft provided with outer splines, and the second splined part is a wheel hub provided with internal splines.

This arrangement provides a spline joint that is both fixed and play free, as well as being sealed against ingress of contamination such as water or particles. The spline joint according to the invention is also easy to assemble and to dismantle for service.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a cross-section through a coupling device according to a preferred embodiment of the invention;
- Figure 2: shows an exploded view of the coupling device of Figure 1.
- Figure 3: shows a vehicle provided with a coupling device.

### MODES FOR CARRYING OUT THE INVENTION

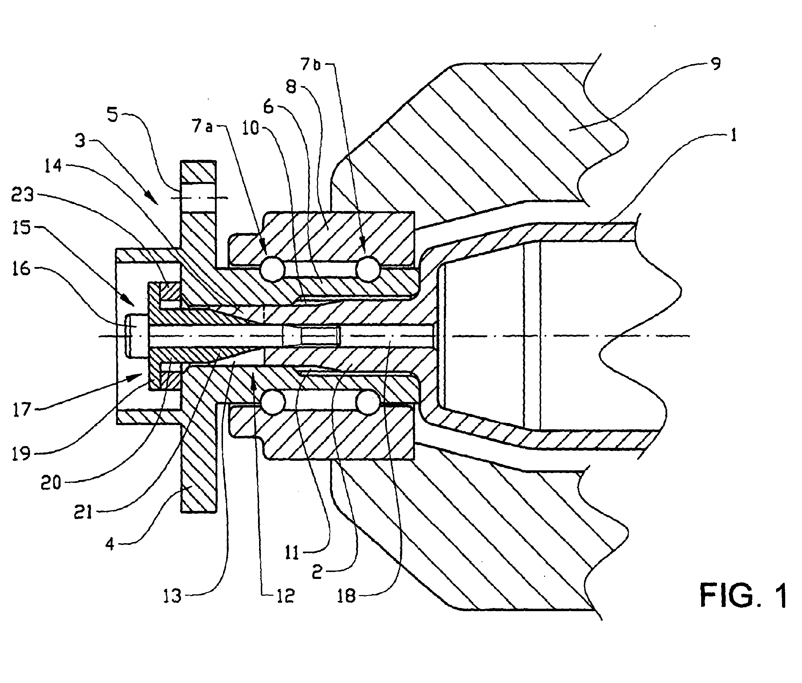

Figure 1 shows a cross-section through a coupling device according to a preferred embodiment of the invention. The device is a part of the driving transmission of a front-wheel drive vehicle (not shown), which transmission includes a drive shaft 1 having a free end 2 extending away from a drive unit towards a driven wheel mounted on a wheel hub 3.

In the following text the terms "inner" and "outer" is used to define locations of individual parts in relation to the central longitudinal axis of the vehicle.

The wheel hub 3 comprises a circular disc section 4 with a number of holes 5 for attaching the rim of a vehicle wheel. The wheel hub 3 further comprises an inner end in the form of a substantially cylindrical section 6 that surrounds the free end 2 of the drive shaft 1. The outer surface of the cylindrical section 6 is arranged as a seat for a conventional wheel bearing, having two sets of cylindrical ball bearings 7a, 7b. An outer seat for the ball bearings 7a, 7b is arranged in an outer cylindrical ring 8, which in turn is supported by a holder 9 in a vehicle wheel suspension (not shown). The inner surface of the cylindrical section 6 is provided with inner, axially extending splines 10 along its entire inner periphery.

The axially extending splines 10 of the cylindrical section 6 are arranged to co-operate with the same number of corresponding splines 11 on the free end 2 of the drive shaft 1. The outer part of the free end 2 is provided with at least one portion 12 that is resiliently deformable in a radial direction. This is achieved by providing the outer part of the free end 2 with a number of cutout slots 13, giving the same number of resiliently deformable tongues 14. The current example is provided with four tongues 14, which, when deformed radially outwards will come into contact with the inner splines 10 on the cylindrical section 6 of the wheel hub 3.

In order to connect the wheel hub 3 and the drive shaft 1 relative to each other in a predetermined fixed position, a fastening element 15 is provided. The fastening element 15 comprises a threaded screw 16 that passes through a holder 17. The head of said screw 16 will contact the outer surface of the holder 17. The threaded screw 16 extends through the holder 17 and into a threaded central bore 18 in the free end 2 of the drive shaft 1. The holder comprises a radial flange 19, for co-operation with an outer surface of the circular disc section 4 of the wheel hub 3, a cylindrical middle section 20, and a conical inner section 21, for co-operation with the resiliently deformable tongues 14 of the free end 2. Consequently, the central bore 18 of said free end 2 diverges outwards to form an internal conical section 22 having substantially the same cone angle α as the conical inner section 21 of the holder 17. A spacer element 23 is inserted between the radial flange 19 of the holder 17 and the outer surface of the circular disc section 4 of the wheel hub 3. This spacer element 23 allows the holder 17 to be centred relative to the free end 2 of the drive shaft, as their respective conical contact surfaces begins to engage. In addition, the spacer element 23 is made from a resilient material, such as rubber or an elastomeric material, that will absorb and/or dampen any relative rotational movement between the wheel hub 3 and the drive shaft 1. The spacer element 23 preferably has a rectangular cross-section to ensure a sufficiently large contact surface between the flange 19 and the surface of the disc section 4, but an 0-ring element may also be used.

The function of the coupling device is as follows. The bearing assembly 7a, 7b, 8 and the wheel hub 3 is mounted in the holder 9 in the vehicle wheel suspension. At the same time the inner cylindrical section 6 is mated with the free end 2 of the drive shaft 1. The fastening element 15, comprising the threaded screw 16 and the holder 17, is inserted into the inner splined section of the cylindrical section 6 of the hub 3. The threaded screw 16 that extends through the holder 17 is then screwed into the threaded central bore 18 in the free end 2. As the threaded screw is rotated, the contact surface of the conical inner section 21 of the holder 17 will come into contact with the corresponding contact surface of the internal conical section 22 of the free end 2. Once the corresponding contact surfaces come into contact with each other, a continued tightening of the screw 16 will cause the free end 2 of the drive shaft and the cylindrical section 6 of the hub to be displaced axially relatively to each other into a fixed operative position. In this way a tightening force applied to the fastening element 15 will draw the splined parts 10, 11 together under simultaneous expansion of the resiliently deformable tongues 14 by the conical inner section 21 of the holder 17.

The free end 2 of the drive shaft 1 will be correctly located when its expanding, resiliently deformable tongues 14 comes into contact with their corresponding surfaces on the inner splined section of the cylindrical section 6 of the hub 3. The tolerance between splined parts 10, 11 of the two mating parts 2, 6 will then go from a loose fit or a close running fit to a press fit, thus reducing the free play between the splines of the hub 3 and the splines on the free end 2 of the drive shaft 1. As the screw 16 is tightened, the spacer element 23 will be compressed between the flange 19 of the holder 17 and the outer surface of the disc section 4 of the wheel hub 3. When the splined sections 10, 11 reaches their predetermined end positions, the compressed spacer element 23 will absorb and/or dampen relative rotational movement between the wheel hub 3 and the drive shaft 1. The spacer element 23 will also act as a seal, preventing water and dirt from entering the splined connection.

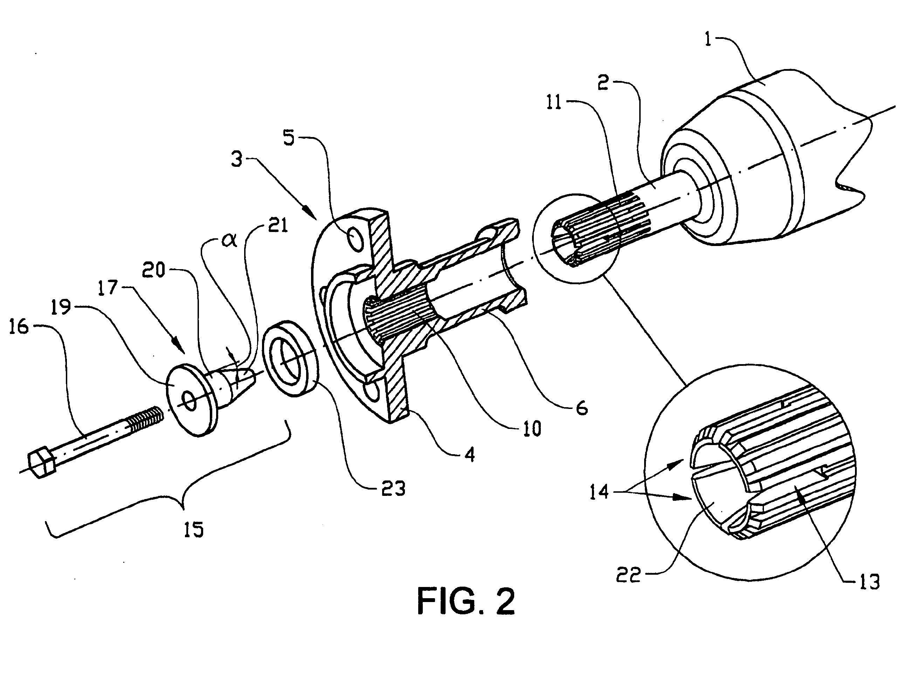

Figure 2 shows an exploded view of the coupling device of Figure 1. The figure also shows an enlarged section of the resiliently deformable tongues 14 at the outer part of the free end 2 of the drive shaft. Figure 2 clearly illustrates all the component parts of the entire coupling device assembly.

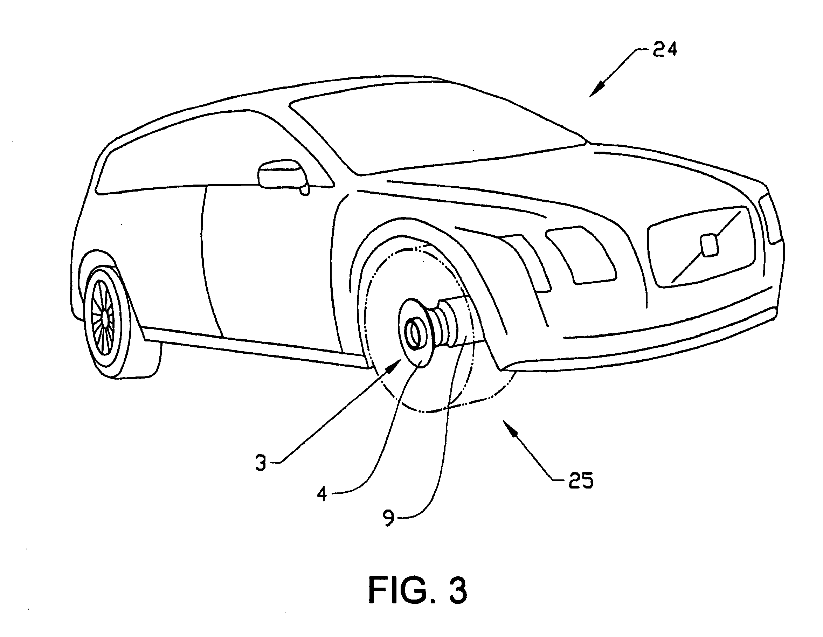

Figure 3 shows a vehicle 24 provided with a coupling device according to the invention. For reasons of clarity, a front wheel 25 of the vehicle 24 is indicated with dashed lines to uncover the hub 3, the disc section 4 and the holder 9. Although only shown on a front wheel in Figure 3, the invention can be used on any front or rear driving axle of a vehicle.

The invention is not limited to the embodiments described above and may be varied freely within the scope of the appended claims.

## Claims

1. A coupling device arranged to maintain a vehicle drive shaft and a wheel hub in driving engagement and rotatable around a common axis, which device comprises a first splined part (1) arranged to co-operate with a second splined part (6) and a fastening element (15) for connecting the first splined part and the second splined part, **characterized in that** at least one of the splined parts has an end section provided with at least one portion that is resiliently deformable in a radial direction, that the fastening element (15) and said portion are each provided with cooperating contact surfaces (21,22) at an angle to the axis of rotation, that the second splined (6) part is arranged to be displaced axially relative to the first splined part (1) into an operative position by the fastening element (15), and the fastening element (15) is arranged to co-operate with the second splined part (6) such that a tightening force applied to the fastening element (15) will axially displace the second splined part (6) into said operative position and resiliently deform said end section.

2. A coupling device according to claim 1, **characterized in that** the first splined (2) part is provided with a slotted section (12) having at least two radial slots (13) at its free end.

3. A coupling device according to claim 2, **characterized in that** the fastening element is arranged to expand the slotted section (12) of the first splined part (2) into contact with the second splined part (1).

4. A coupling device according to claim 2 or 3, **characterized in that** the first splined part (2) is provided with a central threaded bore (18) arranged to co-operate with a threaded section of the fastening element (15).

5. A coupling device according to any one of the above claims, **characterized in that** the co-operating contact surfaces are conical.

6. A coupling device according to any one of the above claims, **characterized in that** the fastening element has a radial flange (19) arranged to co-operate with the second splined part.

7. A coupling device according to claim 6, **characterized in that** the an annular elastic member (23) is placed between the radial flange (19) of the fastening element (15) and the second splined part (6), allowing the fastening element to be centred relative to the second splined part.

8. A coupling device according to claim 7, **characterized in that** the elastic member (23) is arranged as a seal between the fastening element and the second splined part

9. A coupling device according to any one of the above claims, **characterized in that** the first splined part (1) is an axle in the form of a driving shaft provided with outer splines.

10. A coupling device according to any one of the above claims, **characterized in that** the second splined part (6) is a wheel hub provided with internal splines.

11. Vehicle provided with a coupling device according to claim 1, which device is arranged to maintain a drive shaft and a wheel hub in driving engagement and rotatable around a common axis.

12. Vehicle according to claim 11, **characterized in that** the first splined part (1) is an axle in the form of a driving shaft provided with outer splines.

13. Vehicle according to claim 11 or 12, **characterized in that** the second splined part (6) is a wheel hub provided with internal splines.

## Patentansprüche

1. Kupplungsvorrichtung, welche zum Halten einer Fahrzeugantriebswelle und einer Radnabe in Antriebsverbindung und drehbar um eine gemeinsame Achse vorgesehen ist, wobei die Vorrichtung einen ersten Keilabschnitt (1) aufweist, welcher dazu vorgesehen ist, mit einem zweiten Keilabschnitt (6) und einem Befestigungselement (15) für ein Verbinden des ersten Keilabschnitts und des zweiten Keilabschnitts zusammenzuwirken,
**dadurch gekennzeichnet,**
**dass** wenigstens einer der Keilabschnitte einen Endabschnitt aufweist, welcher mit wenigstens einem Abschnitt versehen ist, der in radialer Richtung elastisch deformierbar ausgebildet ist, dass das Befestigungselement (15) und der Abschnitt jeweils mit zusammenwirkenden Kontaktflächen (21, 22), die einen Winkel bezüglich der Rotationsachse aufweisen, versehen sind, dass der zweite Keilabschnitt (6) für ein axiales Verlagern relativ zu dem ersten Keilabschnitt (1) in eine Betriebsstellung mittels des Befestigungselements (15) vorgesehen ist, und das Befestigungselement (15) für ein Zusammenwirken mit dem zweiten Keilabschnitt (6) derart vorgesehen ist, dass eine auf das Befestigungselement (15) wirkende Anziehkraft den zweiten Keilabschnitt (6) in die Betriebsstellung verlagert und den Endabschnitt elastisch deformiert.

2. Kupplungsvorrichtung nach Anspruch 1, **dadurch gekennzeichnet, dass** der erste Keilabschnitt (1) mit einem geschlitzten Abschnitt (12) versehen ist, der wenigstens zwei radiale Schlitze (13) an seinem freien Ende aufweist.

3. Kupplungsvorrichtung nach Anspruch 2, **dadurch gekennzeichnet, dass** das Befestigungselement zum Aufweiten des geschlitzten Abschnitts (12) des ersten Keilabschnitts (2) für einen Kontakt mit dem zweiten Keilabschnitt (1) vorgesehen ist.

4. Kupplungsvorrichtung nach Anspruch 2 oder 3, **dadurch gekennzeichnet, dass** der erste Keilabschnitt (2) mit einer mittigen Gewindebohrung (18) versehen ist, die für ein Zusammenwirken mit einem Gewindeabschnitt des Befestigungselements (15) vorgesehen ist.

5. Kupplungsvorrichtung nach einem der vorhergehenden Ansprüche, **dadurch gekennzeichnet, dass** die zusammenwirkenden Kontaktflächen konisch ausgebildet sind.

6. Kupplungsvorrichtung nach einem der vorhergehenden Ansprüche, **dadurch gekennzeichnet, dass** das Befestigungselement einen radialen Flansch (19) für ein Zusammenwirken mit dem zweiten Keilabschnitt aufweist.

7. Kupplungsvorrichtung nach Anspruch 6, **dadurch gekennzeichnet, dass** ein ringförmiges elastisches Element (23) zwischen dem radialen Flansch (19) des Befestigungselements (15) und dem zweiten Keilabschnitt (6) für ein Zentrieren des Befestigungselements relativ zu dem zweiten Keilabschnitt vorgesehen ist.

8. Kupplungsvorrichtung nach Anspruch 7, **dadurch gekennzeichnet, dass** das elastische Element (23) als Dichtung zwischen dem Befestigungselement und dem zweiten Keilabschnitt ausgebildet ist.

9. Kupplungsvorrichtung nach einem der vorhergehenden Ansprüche, **dadurch gekennzeichnet, dass** der erste Keilabschnitt (1) als eine Achse in der Form einer Antriebswelle, die mit einer äußeren Keilverzahnung versehen ist, ausgebildet ist.

10. Kupplungsvorrichtung nach einem der vorhergehenden Ansprüche, **dadurch gekennzeichnet, dass** der zweite Keilabschnitt (6) als eine Radnabe, die mit einer inneren Keilverzahnung versehen ist, ausgebildet ist.

11. Fahrzeug, welches mit einer Kupplungsvorrichtung gemäß Anspruch 1 versehen ist, wobei die Vorrichtung für ein Halten einer Antriebswelle und einer Radnabe in Antriebsverbindung und drehbar um eine gemeinsame Achse vorgesehen ist.

12. Fahrzeug nach Anspruch 11, **dadurch gekennzeichnet, dass** der erste Keilabschnitt (1) als eine Achse in der Form einer Antriebswelle, die mit einer äußeren Keilverzahnung versehen ist, ausgebildet ist.

13. Fahrzeug nach Anspruch 11 oder 12, **dadurch gekennzeichnet, dass** der zweite Keilabschnitt (6) als eine Radnabe, welche mit einer inneren Keilverzahnung versehen ist, ausgebildet ist.

## Revendications

1. Dispositif de couplage prévu pour maintenir un arbre d'entraînement de véhicule et un moyeu de roue en prise d'entraînement et pouvant tourner autour d'un axe commun, lequel dispositif comporte une première partie cannelée (1) prévue pour coopérer avec une seconde partie cannelée (6), et un élément de fixation (15) pour relier la première partie cannelée et la seconde partie cannelée, **caractérisé en ce qu'**au moins une des parties cannelées a un tronçon d'extrémité muni d'au moins une partie qui est déformable de manière élastique dans une direction radiale, **en ce que** l'élément de fixation (15) et ladite partie sont munis chacun de surfaces de contact coopérantes (21, 22) sur un angle par rapport à l'axe de rotation, **en ce que** la seconde partie cannelée (6) est prévue pour être déplacée axialement par rapport à la première partie cannelée (1) dans une position opérationnelle par l'élément de fixation (15), et l'élément de fixation (15) est prévu pour coopérer avec la seconde partie cannelée (6) de sorte qu'une force de serrage appliquée sur l'élément de fixation (15) va déplacer la seconde partie cannelée (6) axialement jusque dans ladite position opérationnelle, et va déformer ledit tronçon d'extrémité de manière élastique.

2. Dispositif de couplage selon la revendication 1, **caractérisé en ce que** la première partie cannelée (2) est munie d'un tronçon entaillé (12) ayant au moins deux fentes radiales (13) au niveau de son extrémité libre.

3. Dispositif de couplage selon la revendication 2, **caractérisé en ce que** l'élément de fixation est prévu pour déployer le tronçon entaillé (12) de la première partie cannelée (2) en contact avec la seconde partie cannelée (1).

4. Dispositif de couplage selon la revendication 2 ou 3, **caractérisé en ce que** la première partie cannelée (2) est munie d'un alésage central fileté (18) prévu pour coopérer avec un tronçon fileté de l'élément de fixation (15).

5. Dispositif de couplage selon l'une quelconque des revendications précédentes, **caractérisé en ce que** les surfaces de contact coopérantes sont coniques.

6. Dispositif de couplage selon l'une quelconque des revendications précédentes, **caractérisé en ce que** l'élément de fixation a un rebord radial (19) agencé pour coopérer avec la seconde partie cannelée.

7. Dispositif de couplage selon la revendication 6, **caractérisé en ce qu'**un élément élastique annulaire (23) est mis en place entre le rebord radial (19) de l'élément de fixation (15) et la seconde partie cannelée (6), en permettant à l'élément de fixation d'être centré par rapport à la seconde partie cannelée.

8. Dispositif de couplage selon la revendication 7, **caractérisé en ce que** l'élément élastique (23) est agencé en tant que joint d'étanchéité entre l'élément de fixation et la seconde partie cannelée

9. Dispositif de couplage selon l'une quelconque des revendications précédentes, **caractérisé en ce que** la première partie cannelée (1) est un essieu ayant la forme d'un arbre d'entraînement muni de cannelures extérieures.

10. Dispositif de couplage selon l'une quelconque des revendications précédentes, **caractérisé en ce que** la seconde partie cannelée (6) est un moyeu de roue muni de cannelures internes.

11. Véhicule muni d'un dispositif de couplage selon la revendication 1, lequel dispositif est prévu pour maintenir un arbre d'entraînement et un moyeu de roue en prise d'entraînement et pouvant tourner autour d'un axe commun.

12. Véhicule selon la revendication 11, **caractérisé en ce que** la première partie cannelée (1) est un essieu ayant la forme d'un arbre d'entraînement muni de cannelures extérieures.

13. Véhicule selon la revendication 11 ou 12, **caractérisé en ce que** la seconde partie cannelée (6) est un moyeu de roue muni de cannelures internes.
